# EUROPEAN PATENT SPECIFICATION

(11) **EP 2 209 340 B1**
(45) Date of publication and mention of the grant of the patent: **19.02.2014**
(21) Application number: 08837183.6
(22) Date of filing: 06.10.2008
(51) Int. Cl.: H04W 36/00

(54) **CELL RESELECTION/HANDOFF**
WIEDERAUSWAHL/WEITERGABE VON ZELLEN
RESÉLECTION/TRANSFERT DE CELLULE

(30) Priority: 30.09.2007 CN 200710162780
(43) Date of publication of application: 21.07.2010
(73) Proprietor: Huawei Technologies Co., Ltd., Longgang District, Shenzhen Guangdong 518129 (CN)
(72) Inventor: CHEN, Jian, Shenzhen Guangdong 518129 (CN); ZENG, Xu, Shenzhen Guangdong 518129 (CN)
(74) Representative: Pfenning, Meinig & Partner GbR
(86) International application number: PCT/CN2008/072602
(87) International publication number: WO 2009/046680

(56) References cited:
- WO-A1-01/11804
- CN-A- 1 322 419
- CN-A- 101 175 333
- US-A1- 2005 107 085
- US-A1- 2007 105 527

## Description

### FIELD OF THE INVENTION

The present invention relates to the wireless communications field, and more specifically to a method, an apparatus and a system for reselecting or handing over to a cell.

### BACKGROUND

With the flourish of Internet services and the wide development of the broadband access network and the wireless network, a high-speed and convenient access network draws wide attention. A user desires to enjoy wireless data services via a handheld wireless apparatus with high-speed, convenience and low costs. Moreover, to better employ existing network resources and decrease costs of a network apparatus operator, a FEMTO-CELL technique is introduced in the wireless access network and its corresponding network apparatus is referred to as an Access Point (AP).

FEMTO-CELL relates to small cell access nodes within family network coverage, and may support applications such as the convergence of the fixed network and the mobile network, and the IPTV. FEMTO-CELL facilitates 3G multimedia services provided by telecommunications operators, and also embraces security and manageability.

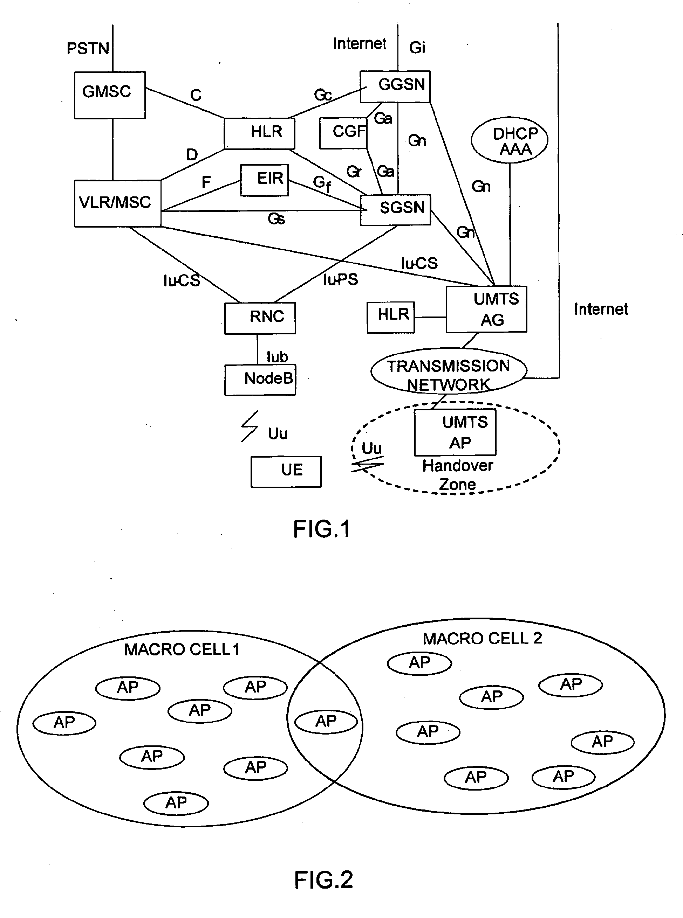

Figure 1 illustrates a schematic diagram of a topology structure, where an AP is introduced in the existing Universal Mobile Telecommunications System (UMTS) network. As illustrated in Figure 1, parts in solid line refer to the schematic diagram of the network topology structure in the existing UMTS network, including a User Equipment (UE), a Node B, a Radio Network Controller (RNC), a Visitor Location Register / Mobile Switching Centre Server (VLR/ MSC), a Serving GPRS Support Node (SGSN), an Equipment Identity Register (EIR), a Charging Gateway Function (CGF), a Gateway GPRS Support Node (GGSN), a Home Location Register (HLR), a Server Gateway MSC Server (GMSC), an UMTS Access Gateway (UMTS AG), and a Dynamic Host Configuration Protocol Authentication, Authorization and Accounting (DHCP AAA) server. The UE is connected to the Node B via the Uu interface; the Node B is connected to the RNC via the Iub interface; the RNC is connected to the VLR/MSC and the SGSN via the Iu-CS interface and Iu-PS interface respectively; the VLR/ MSC is connected to the HLR, the EIR, the SGSN and the UMTS AG via the D interface, F interface, Gs interface, Iu-CS interface, respectively, and is connected to a Public Switched Telephone Network (PSTN) via the GMSC; the GMSC is connected to the HLR via the C interface; the SGSN is connected to the EIR, HLR, CGF and UMTS AG via the Gf interface, Gr interface, Ga interface, Gn interface respectively, and is connected to the GGSN via the Gn interface; the GGSN is connected to the HLR via the Gc interface, and is connected to the Internet via the Gi interface; the UMTS AG is connected to the GGSN via the Gn interface, and is connected to the HLR, the DHCP AAA and a transmission network which connects to the Internet.

Parts in dashed line refer to the introduced UMTS AP, that is, the UMTS Access Point. As can be seen in Figure 1, the UE has to access the Internet through a lot of intermediate apparatuses before the AP is introduced therein. After the AP is introduced in the network, the UE is connected to the AP via Uu interface and the AP is connected to the transmission network via Gi interface, so that the UE may access the Internet directly. Accordingly, the impact on the mobile network from high-speed data services is decreased significantly, and thereby more users of wireless high-speed data may access the existing UMTS network. Furthermore, with the introducing of the AP, the air-interface resource barrier concerning the wireless data services is conquered, and the users of high-speed data services in a macro cell are shunted.

The AP is generally deployed at user's home. One macro cell may include a plurality of AP cells.

Figure 2 illustrates a schematic diagram of position relationships between AP cells and macro cells according to conventional arts. As illustrated in Figure 2, the AP cells are not fixed in position regarding the macro cell. That is, an AP cell may probably locate at the center of a macro cell, or may probably locate on an edge of a macro cell.

When a user arrives at home, the UE needs to be capable of automatically reselecting or handing over to an AP cell from a macro cell, so that the user may enjoy the wireless data services using the UE with high-speed, convenience and low costs, and the workload of the macro cell may also be alleviated. Because the AP is configured automatically and scramble resources are selected actively, where the installation, usage, and suspension of which are based on user behavior, the operator may not yet provide in the macro cell an accurate neighboring relationship between the AP cell and the macro cell. Thus, the macro cell may not provide an indication containing a detailed measurement of the AP cell.

Therefore, the user may not yet be capable of reselecting or handing over to the AP cell normally.

WO 01/11804 A1 describes a method for carrying out an idle handoff from a macro cell to a micro cell (pico cell) in a hierarchical cell structure.

US 2005/0107085 A1 describes a method for facilitating inter-system handover by a multi mode wireless transmit/receive unit. The wireless transmit/receive unit is capable of communicating in multiple wireless communication systems giving different wireless communication protocols.

### SUMMARY

The problems coming along with the prior art are solved by the method for reselecting or handing over to a cell according to claim 1. The dependent claims give advantageous developments of the method according to claim 1.

It can be seen from the foregoing technical solutions, a method, an apparatus and a system for reselecting or handing over to a cell are provided according to the embodiments of the present invention. A user equipment queries a current macro cell in an identification list of neighboring macro cell(s) of an accessible AP, and determines that the accessible AP is included in the current macro cell; the user equipment acquires AP cell information of the accessible AP included in the current macro cell, and measures the accessible AP cell included in the current macro cell based on the AP cell information; and the user equipment reselects an AP cell that meets a reselection requirement base on the measurement result or hands over to an AP cell that meets a handover requirement base on the measurement result. Thus, a reselection or handover to an AP cell from a macro cell is achieved in an FEMTO CELL networking. Therefore, the user may enjoy the wireless data services using the UE with high-speed, convenience and low costs. In addition, the UE may conduct the measurement and the reselection or handover for merely the accessible AP cell(s) within the macro cell, so as to prevent the UE from power consumption due to a blind measurement, and prevent the UE from blindly handing over to an unauthorized AP cell.

### BRIEF DESCRIPTION OF THE DRAWINGS

Figure 1 illustrates a schematic diagram of a topology structure of an existing Universal Mobile Telecommunications System in which an AP is introduced.
Figure 2 illustrates a schematic diagram of position relationships between AP cells and macro cells according to conventional arts.
Figure 3 illustrates a schematic diagram of a system for reselecting or handing over to a cell according to an embodiment of the present invention.
Figure 4 illustrates a schematic diagram of a network access apparatus according to an embodiment of the present invention.
Figure 5 illustrates a schematic diagram of a user equipment according to an embodiment of the present invention.
Figure 6 illustrates a schematic diagram of an auxiliary reselection or handover server according to an embodiment of the present invention.
Figure 7 illustrates a flowchart of a method for reselecting an AP cell according to an embodiment of the present invention.
Figure 8 illustrates a flowchart of a method for handing over a UE to an AP cell from a macro cell according to an embodiment of the present invention.
Figure 9 illustrates a flowchart of a method for automatically switching on an AP according to an embodiment of the present invention.
Figure 10 illustrates a flowchart of a method for automatically switching off an AP according to an embodiment of the present invention.

### DETAILED DESCRIPTION

To describe the goal, technical solutions and advantages concerning the present invention more clearly, illustration of embodiments is made below to the present invention in conjunction with the accompanying drawings.

According to the embodiments of the present invention, it is determined that a current macro cell includes an accessible AP, after the current macro cell is found in an identification list of neighboring macro cell(s) of the accessible AP; a user equipment acquires information of the accessible AP cell included in the current macro cell, measures the accessible AP, and the user equipment is reselected or handed over to an AP cell included in the current macro cell, the measurement result of which meeting the reselection requirement or the handover requirement.

To this end, a system for reselecting or handing over to a cell is provided according to an embodiment of the present invention.

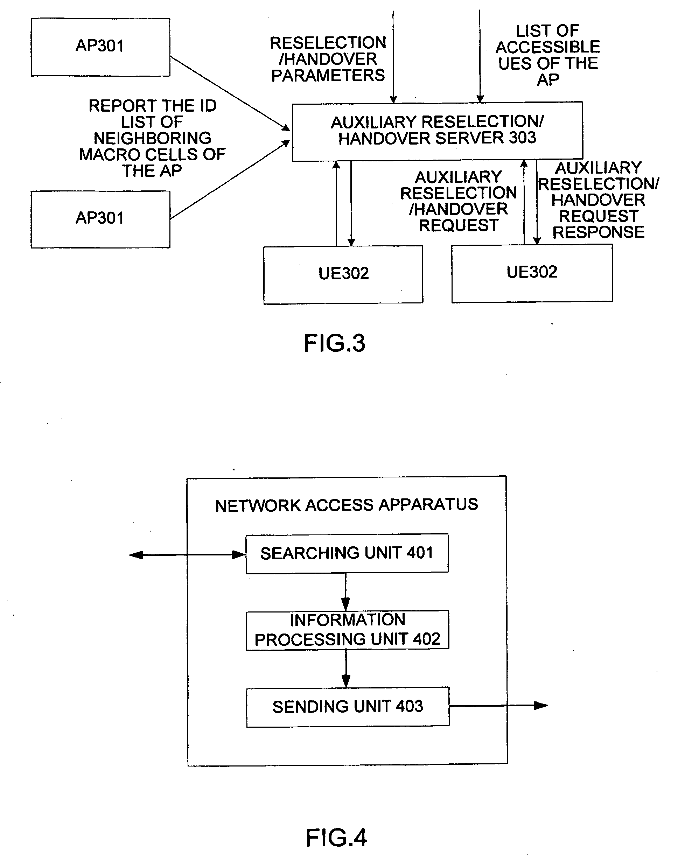

Figure 3 illustrates a schematic diagram of a system for reselecting or handing over to a cell according to an embodiment of the present invention. Referring to Figure 3, the system includes an AP 301, a UE 302, and an auxiliary reselection or handover server 303.

The AP 301 is configured to search for and determine a neighboring macro cell, determine a handover zone based on the neighboring macro cell coverage, generate an identification (ID) list of neighboring macro cells of the AP301, and send the ID list of neighboring macro cells of the AP301 and AP information to the auxiliary reselection or handover server 303.

In the present embodiment, the handover zone refers to the coverage of the AP's neighboring macro cells. For example, as shown in Figure 2, one AP cell falls within a shared coverage of the macro cell 1 and the macro cell 2. Consequently, the handover zone of this AP cell is the macro cell 1 and the macro cell 2, i.e., the neighboring macro cells of this AP is the macro cell 1 and the macro cell 2. With respect to other AP cells within the macro cell 1, as shown in Figure 2, the handover zone of these AP cells is the macro cell 1, i.e., the neighboring macro cells of these APs are the macro cell 1. Similarly, with respect to other AP cells within the macro cell 2, the neighboring macro cells of these APs are the macro cell 2.

The neighboring macro cells may be macro cells in a wireless network system such as a Global System for Mobile Communications (GSM) system, a Code Division Multiple Access (CDMA) system, a UMTS system or a World Interoperability for Microwave Access (WiMAX) system, or may be various evolved wireless network systems such as a High Speed Packet Access (HSPA+) network and a Long Term Evolution (LTE) network.

In practice, when the AP301 finds out that a neighboring macro cell has changed, the AP301 may further send changing information associated with the neighboring macro cell to the auxiliary reselection or handover server 303.

If the AP301 is not capable of searching for neighboring cells of macro cells, e.g., not capable of searching for neighboring macro cells in GSM, geographic location information of the AP may be obtained by a tool of a third party, e.g., a network management apparatus. And, neighboring macro cells of the AP accessible for the UE302 may be matched automatically or manually with a macro cell digital map, and an ID list of the neighboring macro cells of the AP301 may be obtained. Thus, a handover zone for this AP301 is determined.

The auxiliary reselection or handover server 303 may be a logical function entity, which can be set at a short message center for example, and is configured to acquire reselection or handover parameters and an accessible UE list of an AP. The auxiliary reselection or handover server 303 receives ID list of neighboring macro cells of the AP and AP information sent by the AP (e.g., in a UMTS network, the AP information includes frequency points and scramble codes); sends handover zone information to all the UEs belonging to this AP, where the handover zone information carries the ID list of neighboring macro cells of the AP; and sends the AP information to all the UEs belonging to this AP.

When the auxiliary reselection or handover server 303 receives the changing information of the neighboring macro cells, a procedure similar to the procedure of the ID list of the neighboring macro cells of the AP is conducted, handover zone update information is generated and delivered to the UE302.

The handover zone information and the handover zone update information may be sent in various forms such as over a Wireless Application Protocol (WAP), a short message, a Multimedia Messaging Service (MMS), an application layer signaling or a wireless layer signaling. In addition, the handover zone information and the handover zone update information carry the ID list of the neighboring macro cells of an AP, and may further carry a network ID of the neighboring macro cells according to a networking status.

In practice, the auxiliary reselection or handover server 303 may be implemented flexibly as desired. In other words, the auxiliary reselection or handover server 303 may be a physical function entity with no limit to any physical location, which may be implemented separately or be integrated with other physical apparatuses. Or, the auxiliary reselection or handover server 303 may also be a logical function entity, which is implemented in other apparatuses, being set at a short message center for example. The auxiliary reselection or handover server 303 sends information of the accessible AP cells included in the current macro cell to the UE302, which may be sent to the UE302 actively. Or, after an auxiliary reselection or handover request sent by the UE302 is received, a list of the accessible AP cells of this UE302 is acquired. And, the list of the accessible AP cells, information of each AP in the list of the AP cells, and reselection or handover parameters, may be sent to the UE302 as AP cell information of the accessible APs included in the current macro cell. Or, a list of accessible UEs of the AP, information of each AP in the list of the accessible AP cells, and the reselection or handover parameters may be sent to the UE302 as AP cell information of the accessible APs included in the current macro cell.

The active sending includes below steps. The auxiliary reselection or handover server 303 acquires and stores reselection or handover parameters and a list of accessible UEs of an AP from an operation and maintenance center; stores an ID list of neighboring macro cells and AP information reported by the AP301; determines the UEs included in the neighboring macro cell of the AP301 and the list of the accessible UEs of the AP that belong to the neighboring macro cell, based on the ID list of the neighboring macro cells of the AP and AP information reported by the AP301, the list of the accessible UEs of the AP, and information of the reselection or handover parameters. In this embodiment, the list of the accessible UEs of the AP neighboring to the macro cell, information of each AP in the list of the accessible AP cells of an UE included in the macro cell, and the reselection or handover parameters, may be sent to the UE included in the neighboring macro cell of the AP as AP cell information of accessible APs included in the current macro cell.

Or, the auxiliary reselection or handover server 303 receives an auxiliary reselection or handover request sent by the UE302, where the auxiliary reselection or handover request includes, an ID of the current macro cell for the UE, an ID of the UE (e.g., Internet Mobile Subscriber Identification (IMSI)), and an activity of the UE (handover or reselection).

The auxiliary reselection or handover server 303 queries its stored lists of accessible UEs of a plurality of APs based on the ID of the UE included in the auxiliary reselection or handover request, acquires the list of accessible AP cells of the UE302, and determines the list of the accessible UEs of the AP belonging to the current macro cell of the UE302, in combination of the ID of the current macro cell for the UE and the ID list of the neighboring macro cells of various APs. In this embodiment, the list of accessible UEs of the AP, information of each AP in the list of the accessible AP cells, as well as the reselection or handover parameters may be sent to the UE302 as AP cell information of the accessible APs included in the current macro cell via an auxiliary reselection or handover request response.

With respect to the reselection for a cell, the information of the reselection parameters sent by the auxiliary reselection or handover server 303 may also include measurement and control information of each AP in the list of the accessible AP cells. The measurement and control information at least includes a measurement indicator, a measurement initiating threshold for an AP cell, a measurement hysteresis, a duration, a reselection threshold, where the reselection threshold may be a signal offset value between the current AP cell and the measured AP cell.

The auxiliary reselection or handover server 303 acquires the reselection or handover parameters and the list of accessible UEs of an AP from the operation and maintenance center.

With respect to the handover, the information of the handover parameters sent by the auxiliary reselection or handover server 303 may also include measurement and control information of each AP in the list of the accessible AP cells. The measurement and control information at least includes a measurement report mode and a requirement for triggering the measurement report, where the measurement report may be a report triggered by event or may be a periodic report.

The UE302 is configured to receive handover zone information sent by the auxiliary reselection or handover server 303, acquire an ID list of neighboring macro cells of the accessible AP, determine that the accessible AP301 is included in the current macro cell when it is determined that the current macro cell is in the ID list of neighboring macro cells of the accessible AP301; initiate a measurement of the accessible AP cells of the current macro cell, and reselect or hand over to an AP cell, based on the acquired AP cell information of the accessible AP301 for the current macro cell.

When the handover zone update information is received, the acquired ID list of the neighboring macro cells of the accessible AP is updated.

In the case that the auxiliary reselection or handover server 303 actively delivers the AP cell information of the accessible AP included in the current macro cell, the UE302 may store the AP cell information, determine that the accessible AP301 is included in the current macro cell when it is determined that the current macro cell is in the ID list of neighboring macro cells of the accessible AP; initiate a measurement of the accessible AP cell of the current macro cell, based on the stored AP cell information of the accessible AP of the current macro cell, and reselect or hand over to an AP cell,.

In the case that the UE302 requests the auxiliary reselection or handover server 303 for the delivery, the UE302 may send an auxiliary reselection or handover request to the auxiliary reselection or handover server 303 if the UE302 determines that the current macro cell is in the ID list of neighboring macro cells of the accessible AP, and may initiate a measurement of the accessible AP cell of the current macro cell, based on AP cell information of the accessible AP of the current macro cell carried in a response returned by the auxiliary reselection or handover server 303 regarding the auxiliary reselection or handover request, and reselect or hand over to an AP cell,.

In practice, a reselection for an AP cell is performed when the UE302 enters a new macro cell and is in an idle status, or when the UE302 starts up, whereas a handover is performed when the UE302 enters a new macro cell and is in a connected status. When a handover is performed, the UE302 initiates a measurement of the AP cell. If a triggering requirement of the measurement report is met, measurement report information carrying an ID of the current macro cell, related information and signal strength information is sent to a wireless network subsystem that the current macro cell belongs to, and then the wireless network subsystem hands over the UE to the AP cell based on a normal handover and transition procedure. If the triggering requirement of the measurement report is not met, indicating that the UE is not authorized for accessing the AP cell, no process would be performed accordingly.

For ease of illustration, following description takes the UMTS network as an example for illustration.

Figure 4 illustrates a schematic diagram of a network access apparatus, e.g., an AP, according to an embodiment of the present invention. Referring to Figure 4, the network access apparatus includes a searching unit 401, an information processing unit 402, and a sending unit 403, where,
the searching unit 401 is configured to search for neighboring macro cells of the network access apparatus, and send search result to the information processing unit 402;
the information processing unit 402 is configured to receive the search result, determine the neighboring macro cells based on the search result, generate an ID list of the neighboring macro cells of the AP, and send network access apparatus information such as the AP information, and the ID list of the neighboring macro cells of the AP to the sending unit 403; and
the sending unit 403 is configured to receive the ID list of the neighboring macro cells and the AP information (e.g., AP frequency points, and scramble codes information) sent by the information processing unit 402, and send them.

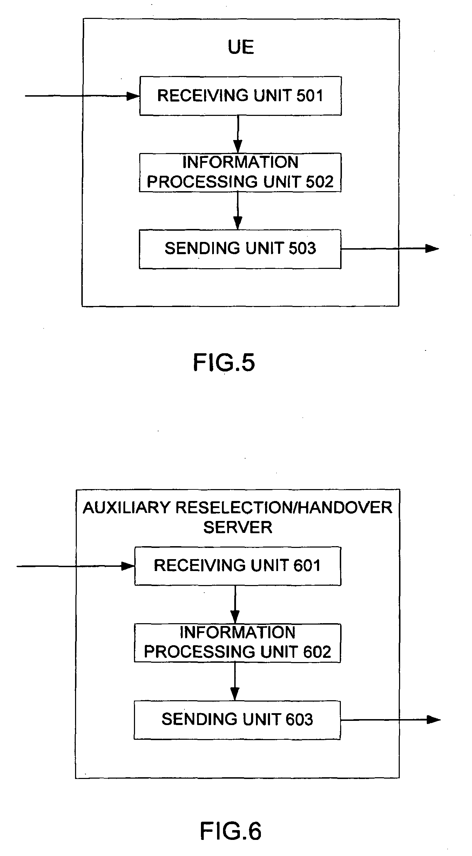

Figure 5 illustrates a schematic diagram of a UE according to an embodiment of the present invention. Referring to Figure 5, the UE includes an information processing unit 502, a receiving unit 501 and a sending unit 503, where,
the receiving unit 501 is configured to receive the ID of the current macro cell and handover zone information, where the handover zone information includes the ID list of neighboring macro cells of an accessible AP, and configured to send the received ID information of the current macro cell and handover zone information to the information processing unit 502;
the information processing unit 502 is configured to generate information for querying the ID of the current macro cell, and send the information to the sending unit 503; receive the handover zone information sent by the receiving unit 501, store the ID list of neighboring macro cells of the accessible AP, query the current macro cell in the ID list of neighboring macro cells of the accessible AP, determine that the accessible AP is included in the current macro cell; measure the AP cell of the accessible AP included in the current macro cell, based on the acquired AP cell information of the accessible AP included in the current macro cell;
the sending unit 503 is configured to receive the information for querying the ID of the current macro cell and send it.

Figure 6 illustrates a schematic diagram of an auxiliary reselection or handover server according to an embodiment of the present invention. Referring to Figure 6, the auxiliary reselection or handover server includes a receiving unit 601, a sending unit 603 and an information processing unit 602, where,
the receiving unit 601 is configured to receive reselection or handover parameters and a list of accessible UEs of an AP from an operation and maintenance center; receive an ID list of neighboring macro cells of the AP and AP information sent by the AP, and send the received reselection or handover parameters, the list of accessible UEs of an AP, the ID list of neighboring macro cells of the AP and the AP information to the information processing unit 602;
the information processing unit 602 is configured to receive and store the reselection or handover parameters, the list of accessible UEs of the AP, the ID list of neighboring macro cells of the AP; send handover zone information to the sending unit 603 based on the stored list of accessible UEs of the AP; obtain the AP cell information of the accessible APs included in the current macro cell based on the stored information, and send the obtained AP cell information of the accessible APs to the sending unit 603; and
the sending unit 603 is configured to receive the handover zone information and the AP cell information of the accessible APs included in the current macro cell sent by the information processing unit 602, and send the received information to the UE.

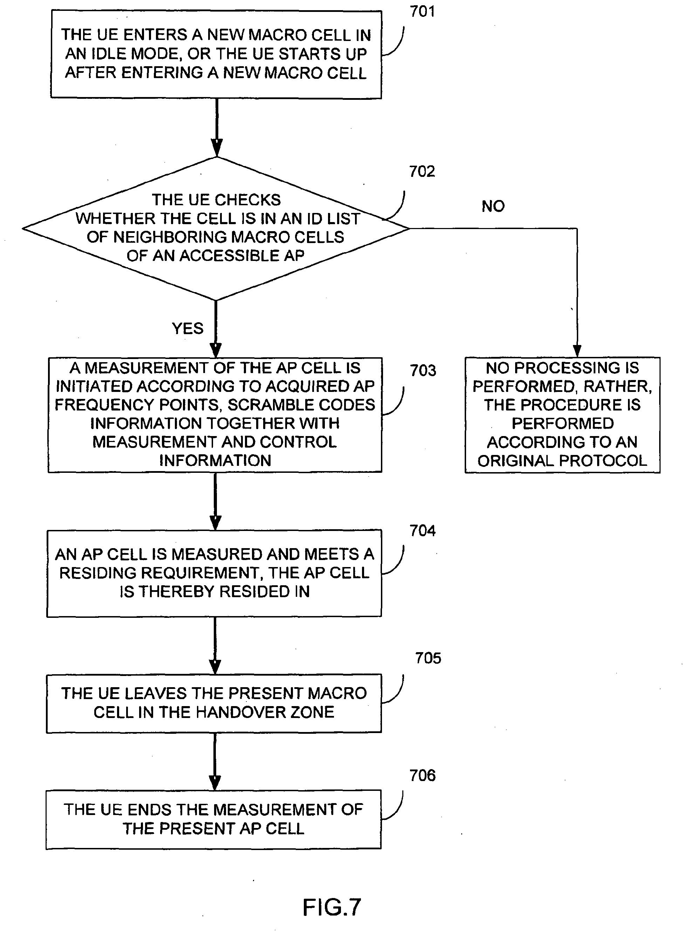

It can be seen from the foregoing embodiments, according to the embodiments of the present invention, the AP determines neighboring macro cells, acquires an ID list of the neighboring macro cells, sends the ID list of the neighboring macro cells of the AP to an auxiliary reselection or handover server, so that the UE may acquire the ID list of the neighboring macro cells of the accessible APs from the received handover zone information via the auxiliary reselection or handover server. Because the auxiliary reselection or handover server provides detailed information of the accessible AP cells of the UE, the UE may conduct a measurement and a reselection or handover merely in terms of the accessible AP cells of the UE, so as to prevent the situations such as the UE may blindly conduct a measurement that requires much power consumption and may blindly hand over to an unauthorized AP cell during the reselection or handover from a macro cell to an AP cell. Figure 7 illustrates a flowchart of a method for reselecting an AP cell according to an embodiment of the present invention. Referring to Figure 7, the method includes the following steps.

Step 701: The UE enters a new macro cell in an idle mode, or the UE starts up after entering a new macro cell.

Step 702: The UE checks whether the macro cell is in an ID list of neighboring macro cells of an accessible AP. If the macro cell is in the ID list, the accessible AP for the UE is thus included in the current macro cell, and step 703 is performed; otherwise, the procedure is performed according to an original protocol.

At this step, the AP is initiated, and then searches for neighboring macro cells, Therefore, the ID list of the neighboring macro cells of the accessible AP is determined based on the search result. The AP sends the ID list of the neighboring macro cells of the AP to an auxiliary reselection or handover server, so that the auxiliary reselection or handover server may acquire the ID of the UE included in the AP cell based on the received information, and may send handover zone information to the UE. Thus, the UE may receive the handover zone information and acquire the ID list of the neighboring macro cells of the accessible AP.

In practice, the UE may also update the stored and associated information according to the received handover zone update information.

Step 703: A measurement of the accessible AP cells is initiated according to acquired AP frequency points, scramble codes information together with measurement and control information.

At this step, the AP frequency points, the scramble codes information, the measurement and control information are acquired in the following ways.

The auxiliary reselection or handover server acquires a list of accessible UEs of an AP, and reselection or handover parameters from an operation and maintenance center; and stores them.

The auxiliary reselection or handover server sends the list of accessible AP cells included in the neighboring macro cells, the AP frequency points, the scramble codes information and reselection or handover parameters to the UE, which may be sent to the UE actively. Or, after an auxiliary reselection or handover request sent by the UE is received, the list of the accessible AP cells, information of each AP in the list of the AP cells, and the reselection or handover parameters may be carried in a request response from the auxiliary reselection or handover server, and then sent the request response to the UE.

Step 704: An AP cell is measured and the AP cell meets a residing requirement, the AP cell is thereby resided in.

Step 705: The UE leaves the current macro cell.

Step 706: The UE ends the measurement of the current AP cell.

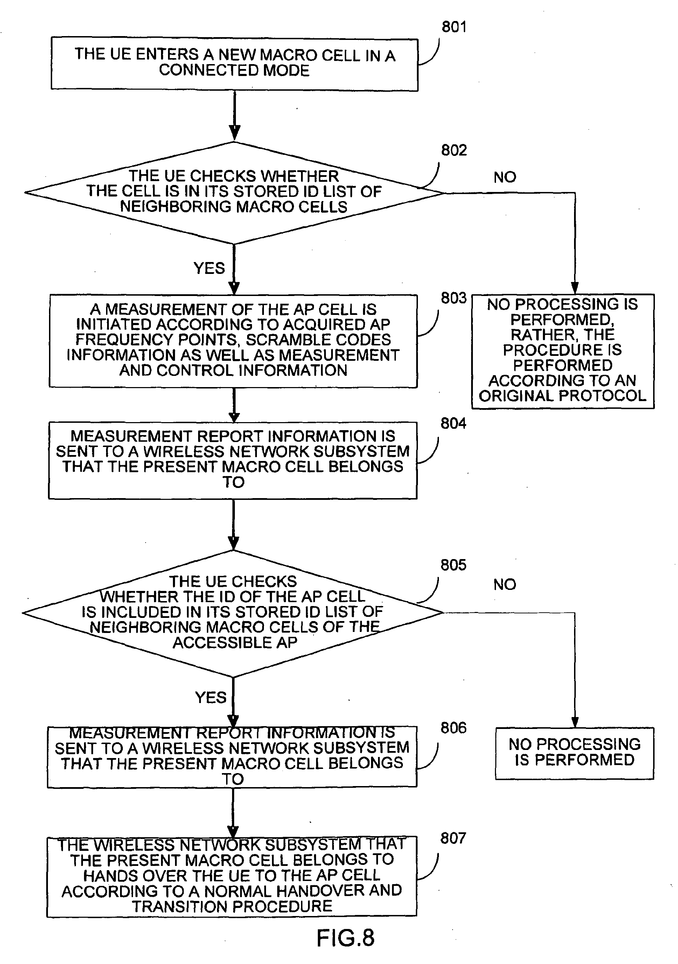

Figure 8 illustrates a flowchart of a method for handing over a UE to an AP cell from a macro cell according to an embodiment of the present invention. Referring to Figure 8, the method includes the following steps.

Step 801: The UE enters a new macro cell in a connected mode.

Step 802: The UE checks whether the macro cell is in an ID list of neighboring macro cells of an accessible AP. If the macro cell is in the ID list, the accessible AP is thus included in the current macro cell, and step 803 is performed; otherwise, the procedure is performed according to an original protocol.

Step 803: A measurement of the accessible AP cells is initiated according to acquired AP frequency points, scramble codes information as well as measurement and control information.

Step 804: Signal strength of the accessible AP cells and ID of the accessible AP cells are obtained.

Step 805: The UE checks whether the ID of an accessible AP cell is included in its stored ID list of neighboring macro cells of the accessible AP. If the ID of the accessible AP cell is included, step 806 is performed; if the ID of the accessible AP cell is not included, the UE determines that it is not authorized for accessing the accessible AP cell, and no processing is performed accordingly.

Step 806: Measurement report information including an ID of the current macro cell, frequency points, scramble codes and signal strength information is sent to a wireless network subsystem that the current macro cell belongs to.

Step 807: The wireless network subsystem that the current macro cell belongs to hands over the UE to the AP cell according to a normal handover and transition procedure.

At this step, e.g., in the UMTS system, the wireless network subsystem includes a Node B and an RNC, in which the RNC manages a normal handover and transition procedure. In an evolved wireless system however, e.g., in the LTE system, some part of functionality of the RNC is shifted downward to the Node B while some part of its functionality is shifted upward to a core network. At this point, the wireless network subsystem may include the Node B only. Thus, it is possible that the Node B is required for managing the normal handover and transition procedure. For other wireless network systems, e.g., a GSM system, it is not difficult to understand a structure of its wireless network subsystem for those skilled in the art.

In practice, power is consumed during the transmission for wireless signals by the AP. For an AP, the power for transmitting wireless signals may take up more than 50% of its total power consumption. For example, assume that the total power for an AP is 10W when its radio frequency (RF) is switched on during the transmission of wireless signals, nevertheless the power may probably be reduced to 5W when its RF signals are switched off. In the case when an AP is implemented in a family network, in which the user may not be home most of the time but go out for working, during this period, however, the RF part of the AP may continue the transmission for RF signals, resulting in a waste of power. Switching on or switching off the RF of the AP may both save the power and decrease the unnecessary power transmission of air-interfaces, so that the interference level of the whole network may be reduced, and the impact of the AP on the macro cell and peripheral APs may be decreased.

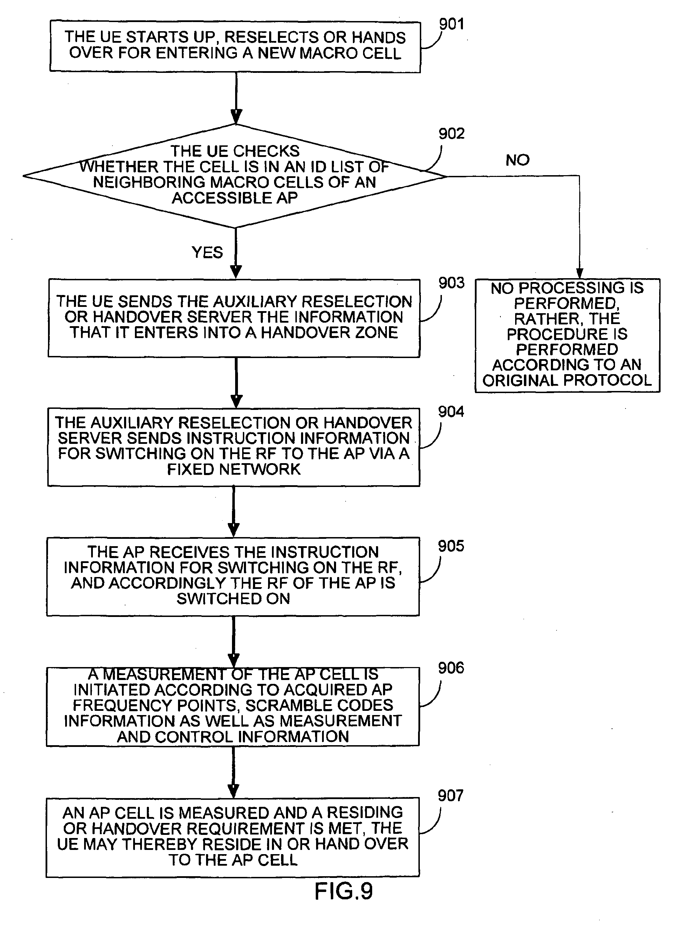

Figure 9 illustrates a flowchart of a method for automatically switching on an AP according to an embodiment of the present invention. Referring to Figure 9, the method includes the following steps.

Step 901: The UE starts up, reselects or hands over to enter a new macro cell.

Step 902: The UE checks whether the macro cell is in an ID list of neighboring macro cells of an accessible AP. If the macro cell is in the ID list, it indicates that the accessible AP is included in the current macro cell, step 903 is then performed; if the macro cell is not in the ID list, no processing is performed and the procedure is performed according to an original protocol.

Step 903: The UE sends the auxiliary reselection or handover server the information that it enters into a handover zone.

At this step, the information may be sent to the auxiliary reselection or handover server via a short message or other signaling, or may also be included in an auxiliary reselection or handover request sent from the UE to the auxiliary reselection or handover server.

Step 904: The auxiliary reselection or handover server sends instruction information for switching on the RF to the AP via a fixed network.

At this step, the instruction information for switching on the RF may be sent to the AP via a fixed network such as the Public Switched Data Network (PSTN).

Step 905: The AP receives the instruction information for switching on the RF, and accordingly the RF of the AP is switched on.

Step 906: The UE initiates a measurement of the AP cell according to acquired AP frequency points, scramble codes information, and measurement and control information.

Step 907: An AP cell is measured and a residing or handover requirement is met, the UE may thereby reside in or hand over to the AP cell.

When the UE leaves the AP cell in the handover zone, the UE may notify the network of switching off the RF of the AP.

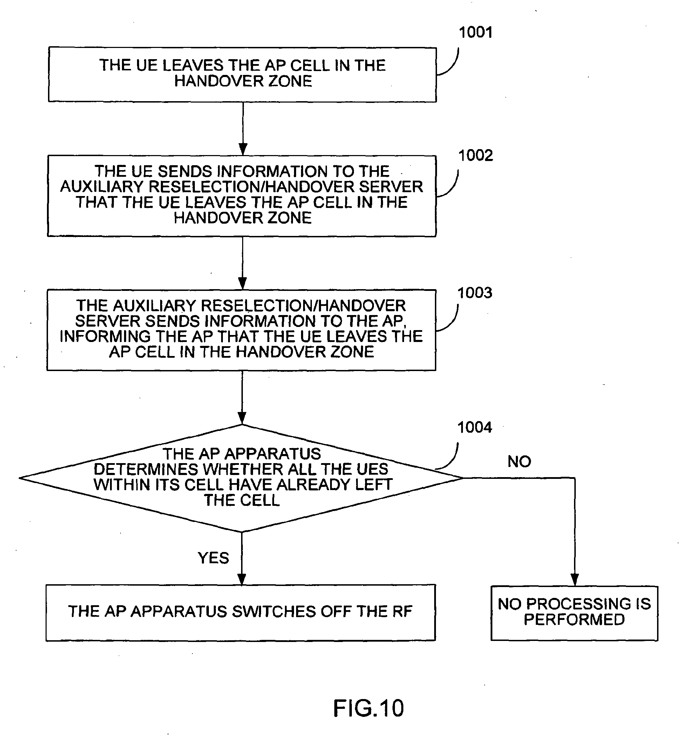

Figure 10 illustrates a flowchart of a method for automatically switching off an AP according to an embodiment of the present invention. Referring to Figure 10, the method includes the following steps.

Step 1001: The UE leaves the AP cell in the handover zone.

Step 1002: The UE sends information to the auxiliary reselection or handover server, informing the auxiliary reselection or handover server that the UE has already left the AP cell in the handover zone.

At this step, the information may be sent to the auxiliary reselection or handover server via a short message or other signaling.

Step 1003: The auxiliary reselection or handover server sends information to the AP, informing the AP that the UE has already left the AP cell in the handover zone.

At this step, the instruction information for switching off the RF may further be sent to the AP via a fixed network such as the PSTN.

Step 1004: The AP determines whether all the UEs within its cell have already left the cell. If all the UEs have left the cell, the AP switches off the RF; if not all the UEs have left the cell, no processing is performed.

In practice, to prevent the situation in which the AP is incapable of switching off the RF due to a user equipment being turned off or some abnormities, the AP needs to count and record the users who register on the AP. When a UE has not sent location update or routing area update information to the AP for two or three continuous location update periods, the AP may consider that the user has already left the AP. The AP then determines whether the number of current registered users is zero. If the number is zero, the AP may switch off the RF.

In practice, an ID list of neighboring macro cells of the accessible AP is stored at the UE. When entering a new macro cell or starting up, the UE will not initiate a reselection or handover procedure but stay outside the handover zone, if the current macro cell is not in the ID list of the neighboring macro cells of the accessible AP, i.e., the current macro cell is not located in the stored handover zone, so that the power consumption of the UE is reduced.

With the description of the foregoing embodiments, it is readily appreciated by those skilled in the art that the present invention may also be implemented with software in combination of a universal hardware platform, or, of course, may also be entirely implemented with hardware. Based on this understanding, technical solutions of the present invention, or the part which the present invention makes contribution off the prior art may be embodied in a software product. The computer software product may be stored in a readable storage media such as ROM/RAM, magnetic disc, or optical disc. The software product may include a set of instructions to perform methods according to various embodiments or some parts of the embodiments of the present invention.

It can be seen from the foregoing embodiments, a method, an apparatus and a system for reselecting or handing over to a cell are provided according to the embodiments of the present invention, where the AP determines neighboring macro cells, acquires an ID list of the neighboring macro cells, reports the ID list of the neighboring macro cells of the AP to an auxiliary reselection or handover server, so that the UE may acquire the ID list of the neighboring macro cells of the accessible AP from the received handover zone information via the auxiliary reselection or handover server. Because the auxiliary reselection or handover server provides detailed information of the accessible AP cell of the UE, the user may enjoy the wireless data services using the UE with high-speed, convenience and low costs. Also, the UE may conduct the measurement and the reselection or handover within the macro cell merely in terms of the accessible AP cell, so as to save the power of the UE, and prevent the UE from blindly handing over to an unauthorized AP cell. Furthermore, the UE sends to the AP via the auxiliary reselection or handover server, information for switching on the RF signals or information that the UE leaves the AP cell in the handover zone, so that the AP may automatically switch on or switch off the RF signals. This may further save the power of the AP. Moreover, the unnecessary power transmission of air-interfaces may also be decreased, thereby effectively reducing the interference level of the whole network, and decreasing the impact of the AP on the macro cell and peripheral APs. The above preferred embodiments further illustrate the purpose, technical solution and advantages of the present invention. It is understood that the foregoing embodiments are merely preferred embodiments of the present invention, and are not intended to set limitation to the present invention. The scope of protection is defined by the appended claims.

## Claims

1. A method for reselecting or handing over to a cell, comprising:
acquiring access point, AP, cell information of an accessible Access Point, AP (301), included in a current macro cell; and
sending the AP cell information of the accessible AP (301) to a user equipment (302) for reselection or handover.
**characterized in that**, acquiring the AP cell information of the accessible AP (301) included in the current macro cell comprises:
receiving a reselection or handover request sent by the user equipment (302), wherein, the reselection or handover request includes an identification of the user equipment (302), and an identification of the current macro cell of the user equipment;
acquiring an identification list of neighboring macro cell(s) of the AP (301); and
acquiring the AP cell information of the accessible AP (301) based on the identification of the user equipment (302), the identification of the current macro cell and the identification list of neighboring macro cell(s).

2. The method of claim 1, **characterized in that**, acquiring the AP cell information of the accessible AP included in the current macro cell comprises:
acquiring a list of accessible user equipments of the AP (301);
acquiring an identification list of neighboring macro cell(s) of the AP (301); and
acquiring the AP cell information of the accessible AP (301) included in the current macro cell based on the list of accessible user equipments of the AP and the identification list of neighboring macro cell(s) of the AP.

3. The method of claim 1, **characterized by** further comprising:
receiving information that the user equipment (302) enters a handover zone, and sending an instruction information for switching on a radio frequency to the accessible AP included in the current macro cell; or
receiving information that the user equipment (302) leaves the AP cell, and sending the information to the AP (301) associated with the AP cell.

## Patentansprüche

1. Verfahren für eine Neuauswahl oder ein Handover zu einer Zelle, das Folgendes umfasst:
Erfassen von Zelleninformationen eines Zugangspunkts, AP, eines zugänglichen Zugangspunkts ("Access Point"), AP (301), der in einer aktuellen Makrozelle enthalten ist; und
Senden der AP-Zelleninformationen des zugänglichen AP (301) an ein Benutzerendgerät (302) für eine Neuauswahl oder ein Handover;
**dadurch gekennzeichnet, dass** das Erfassen der AP-Zelleninformationen des zugänglichen AP (301), der in der aktuellen Makrozelle enthalten ist, Folgendes umfasst:
Empfangen einer durch das Benutzerendgerät (302) gesendeten Neuauswahl- oder Handover-Aufforderung, wobei die Neuauswahl- oder Handover-Aufforderung eine Kennung des Benutzerendgeräts (302) und eine Kennung der aktuellen Makrozelle des Benutzerendgeräts enthält;
Erfassen einer Kennungsliste einer benachbarten Makrozelle/benachbarter Makrozellen des AP (301); und
Erfassen der AP-Zelleninformationen des zugänglichen AP (301) basierend auf der Kennung des Benutzerendgeräts (302), der Kennung der aktuellen Makrozelle und der Kennungsliste einer benachbarten Makrozelle/benachbarter Makrozellen.

2. Verfahren nach Anspruch 1, **dadurch gekennzeichnet, dass** das Erfassen der AP-Zelleninformationen des zugänglichen AP, der in der aktuellen Makrozelle enthalten ist, Folgendes umfasst:
Erfassen einer Liste zugänglicher Benutzerendgeräte des AP (301);
Erfassen einer Kennungsliste einer benachbarten Makrozelle/benachbarter Makrozellen des AP (301); und
Erfassen der AP-Zelleninformationen des zugänglichen AP (301), der in der aktuellen Makrozelle enthalten ist, basierend auf der Liste zugänglicher Benutzerendgeräte des AP und der Kennungsliste einer benachbarten Makrozelle/benachbarter Makrozellen des AP.

3. Verfahren nach Anspruch 1, **dadurch gekennzeichnet, dass** es ferner Folgendes umfasst:
Empfangen von Informationen, dass das Benutzerendgerät (302) in eine Handover-Zone eintritt, und Senden einer Befehlsinformation zum Einschalten einer Funkfrequenz an den zugänglichen AP, der in der aktuellen Makrozelle enthalten ist; oder
Empfangen von Informationen, dass das Benutzerendgerät (302) die AP-Zelle verlässt, und Senden der Informationen an den mit der AP-Zelle assoziierten AP (301).

## Revendications

1. Procédé destiné à opérer une nouvelle sélection ou un transfert de communication vers une cellule, comprenant :
la récupération d'informations de cellule sur un point d'accès, AP, concernant un point d'accès accessible, AP (301), incluses dans une macro cellule en cours, et
l'envoi à un équipement utilisateur (302) des informations de cellule de point AP concernant le point AP accessible (301) en vue d'une nouvelle sélection ou d'un transfert de communication,
**caractérisé en ce que** la récupération des informations de cellule de point AP concernant le point AP accessible (301), incluses dans la macro cellule en cours, comprend :
la réception d'une demande de nouvelle sélection ou de transfert de communication par l'équipement utilisateur (302), dans lequel la demande de nouvelle sélection ou de transfert de communication inclut l'identification de l'équipement utilisateur (302) et une identification de la macro cellule en cours de l'équipement utilisateur,
la récupération d'une liste d'identifications d'une ou de plusieurs macro cellules voisines du point AP (301), et
la récupération des informations de cellule de point AP concernant le point AP accessible (301) sur la base de l'identification de l'équipement utilisateur (302), de l'identification de la macro cellule en cours et de la liste d'identifications d'une ou de plusieurs macro cellules voisines.

2. Procédé selon la revendication 1, **caractérisé en ce que** la récupération d'informations de cellule de point AP concernant le point AP accessible, incluses dans la macro cellule en cours comprend :
la récupération d'une liste d'équipements utilisateur accessibles du point AP (301),
la récupération d'une liste d'identifications d'une ou de plusieurs macro cellules voisines du point AP (301), et
la récupération des informations de cellule de point AP concernant le point AP accessible (301) incluses dans la macro cellule en cours sur la base de la liste d'équipements utilisateur accessibles du point AP et de la liste d'identifications de la ou des macro cellules voisines du point AP.

3. Procédé selon la revendication 1, **caractérisé en ce qu'**il comprend en outre :
la réception d'informations concernant le fait qu'un équipement utilisateur (302) entre dans une zone de transfert de communication, et l'envoi d'une information d'instruction pour basculer sur une radio fréquence vers le point AP accessible inclus dans la macro cellule en cours, ou
la réception d'informations concernant le fait que l'équipement utilisateur (302) quitte la cellule du point AP, et l'envoi des informations au point AP (301) associées à la cellule de point AP.
